# EUROPEAN PATENT APPLICATION

(11) **EP 3 904 565 A1**
(43) Date of publication of application: **03.11.2021**
(21) Application number: 19902489.4
(22) Date of filing: 20.12.2019
(51) Int. Cl.: C25D 5/14, C25D 5/12, C25D 5/50, C21D 9/46, C22C 19/03, C22C 38/00, C22C 38/12

(54) **NI-PLATED STEEL SHEET HAVING EXCELLENT POST-PROCESSING CORROSION RESISTANCE AND PRODUCTION METHOD THEREFOR**

(30) Priority: 27.12.2018 JP 2018245985
(71) Applicant: NIPPON STEEL CORPORATION, Chiyoda-ku Tokyo 100-8071 (JP)
(72) Inventor: TAKAHASHI Takehiro, Tokyo 100-8071 (JP); GOTO Yasuto, Tokyo 100-8071 (JP); MAKI Jun, Tokyo 100-8071 (JP)
(74) Representative: Vossius & Partner Patentanwälte Rechtsanwälte mbB
(86) International application number: PCT/JP2019/050074
(87) International publication number: WO 2020/137874

(57) **Abstract**

A Ni-coated steel sheet according to an aspect of the present invention includes: a base steel sheet; a diffusion alloy layer disposed on the base steel sheet; and a Ni-coated layer disposed on the diffusion alloy layer, in which a depth-hardness curve obtained by continuously performing Vickers hardness measurement on a cross section perpendicular to a rolled surface of the base steel sheet from a surface layer of the Ni-coated layer to the base steel sheet using a nanoindenter includes, in the diffusion alloy layer, a peak indicating a Vickers hardness of 1.50 times or more a Vickers hardness of the surface layer of the Ni-coated layer.

## Description

### [Technical Field of the Invention]

The present invention relates to a Ni-coated steel sheet having excellent corrosion resistance after working and a method for manufacturing the Ni-coated steel sheet.

Priority is claimed on Japanese Patent Application No. 2018-245985, filed December 27, 2018, the content of which is incorporated herein by reference.

### [Related Art]

Ni-coated steel sheets have high chemical stability and are therefore suitable as materials for battery cans. However, steel sheets for batteries are further required to have no cracks in a Ni coating during press working (referred to as press workability or simply "workability") and to be free from the propagation of defects due to sliding during press working (referred to as "defect formation resistance"). This is because if cracks or damage occur in the coating, the chemical stability and corrosion resistance after working of the Ni-coated steel sheet are impaired. There are cases where the corrosion resistance of a steel sheet after bending during press working is referred to as corrosion resistance after bending, and the corrosion resistance of the steel sheet after sliding during press working is referred to as corrosion resistance after sliding. In addition, there are cases where the corrosion resistance after bending and the corrosion resistance after sliding are collectively referred to as corrosion resistance after working.

In recent years, there has been an increasing demand for a decrease in size and increase in capacity of batteries. Therefore, the corrosion resistance after working required for steel sheets for batteries has also increased.

As techniques related to Ni-coated steel sheets, the following have been proposed.

Patent Document 1 discloses a technique for providing a surface-treated steel sheet for a lithium ion battery case capable of improving galling resistance, corrosion resistance, and battery characteristics during working, and a method for manufacturing the same. That is, Patent Document 1 discloses a surface-treated steel sheet for a lithium ion battery case in which a surface that is to become the outer surface of a battery case includes a Ni-Fe diffusion layer as a lower layer, a recrystallized Ni layer as an intermediate layer, a Ni-Fe alloy layer having an Fe content of 27 to 40 mass% as an upper layer, the sum of the amount of Ni in the Ni-Fe diffusion layer as the lower layer and the amount of Ni in the recrystallized Ni layer as the intermediate layer is 4.0 to 16.0 g/m², the amount of Ni in the Ni-Fe alloy layer having an Fe content of 27 to 40 mass% as the upper layer is 0.5 to 4.0 g/m², a surface that is to become the inner surface of the battery case includes a Ni-Fe diffusion layer as a lower layer and a recrystallized Ni layer as an upper layer, and the sum of the amount of Ni in the Ni-Fe diffusion layer as the lower layer and the amount of Ni in the recrystallized Ni layer as the upper layer is 4.0 to 24.0 g/m².

Patent Document 2 discloses a technique for providing a surface-treated steel sheet for a battery container capable of suppressing the elution of iron inside a battery when used as a battery container, whereby the life of the battery can be extended and furthermore, the battery characteristics such as discharge characteristics are improved. That is, Patent Document 2 discloses the surface-treated steel sheet for a battery container, which is obtained by subjecting a steel sheet to iron-nickel alloy coating and then a heat treatment, in which the outermost layer is an iron-nickel alloy layer, and the iron-nickel alloy layer has an average grain size of 1 to 8 µm on the outermost surface.

Patent Document 3 discloses a technique for providing a coated steel sheet in which a chemical conversion film is formed on the surface of a Ni-plated cold-rolled steel sheet, a resin coating film containing a conductive agent is further formed on the film, and coating film adhesion is not lowered by working strain even when worked into a positive electrode can by press working. That is, Patent Document 3 discloses a coated metal for an alkaline battery positive electrode can having a Ni-coated layer hardness of 300 to 650 in terms of Vickers hardness in the coated steel sheet in which the chemical conversion film is formed on the surface of the Ni-plated cold-rolled steel sheet and the resin coating film containing the conductive agent is further formed on the film.

Patent Document 4 discloses a technique for providing a surface-treated steel sheet for a battery container capable of suppressing the elution of iron inside a battery when used as a battery container, whereby the life of the battery can be extended and furthermore, the battery characteristics such as discharge characteristics are improved. That is, Patent Document 4 discloses the surface-treated steel sheet for a battery container, which is obtained by subjecting a steel sheet to iron-nickel alloy coating and then a heat treatment, in which the outermost layer is an iron-nickel alloy layer, and the iron-nickel alloy layer has an average grain size of 1 to 8 µm on the outermost surface.

Patent Document 5 discloses a technique for providing a surface-treated steel sheet for a battery container having excellent corrosion resistance even in a case where the thickness of a can wall is reduced to improve a volume ratio when the steel sheet is used as a battery container. That is, Patent Document 5 discloses a surface-treated steel sheet for a battery container including a steel sheet, an iron-nickel diffusion layer formed on the steel sheet, and a nickel layer formed on the iron-nickel diffusion layer to form the outermost layer, in which, when an Fe intensity and a Ni intensity are continuously measured from the surface of the surface-treated steel sheet for a battery container in a depth direction by a radio-frequency glow discharge optical emission spectroscopic analyzer, the thickness of the iron-nickel diffusion layer, which is the difference (D2 - D1) between a depth (D1) at which the Fe intensity shows a first predetermined value and a depth (D2) at which the Ni intensity shows a second predetermined value, is 0.04 to 0.31 µm, and the total amount of nickel contained in the iron-nickel diffusion layer and the nickel layer is 4.4 g/m² or more and less than 10.8 g/m².

Patent Document 6 discloses a technique for providing a material for a battery can in which battery characteristics and corrosion resistance are simultaneously improved in manufacturing a battery can by DI drawing. That is, Patent Document 6 discloses a multilayer nickel-plated steel sheet having excellent corrosion resistance, including an iron-nickel alloy layer as a first layer, a soft nickel coating layer as an intermediate layer formed on the first layer, and a hard nickel coating layer as an outermost coating layer formed on the intermediate layer, on at least one surface of the steel sheet.

However, even with the techniques described in Patent Documents 1 to 6, the demand for corrosion resistance after working, which has further increased in recent years, cannot be sufficiently satisfied.

### [Prior Art Document]

### [Patent Document]

[Patent Document 1] Japanese Unexamined Patent Application, First Publication No. 2013-170308
[Patent Document 2] Japanese Unexamined Patent Application, First Publication No. 2015-032346
[Patent Document 3] Japanese Unexamined Patent Application, First Publication No. H08-287885
[Patent Document 4] PCT International Publication No. WO2015/015846
[Patent Document 5] PCT International Publication No. WO2017/094919
[Patent Document 6] Japanese Unexamined Patent Application, First Publication No. 2000-234197

### [Disclosure of the Invention]

### [Problems to be Solved by the Invention]

An object of the present invention is to provide a Ni-coated steel sheet having excellent corrosion resistance (corrosion resistance after working) after being bent or slid by press working. Another object of the present invention is to provide a method for manufacturing a Ni-coated steel sheet having excellent corrosion resistance after working.

### [Means for Solving the Problem]

The gist of the present invention for solving the above problems is as follows.
(1) A Ni-coated steel sheet having excellent corrosion resistance after working according to an aspect of the present invention includes: a base steel sheet; a diffusion alloy layer disposed on the base steel sheet; and a Ni-coated layer disposed on the diffusion alloy layer, in which a depth-hardness curve obtained by continuously performing Vickers hardness measurement on a cross section perpendicular to a rolled surface of the base steel sheet from a surface layer of the Ni-coated layer to the base steel sheet using a nanoindenter includes, in the diffusion alloy layer, a peak indicating a Vickers hardness of 1.50 times or more a Vickers hardness of the surface layer of the Ni-coated layer.
(2) In the Ni-coated steel sheet having excellent corrosion resistance after working according to (1), a Ni coating weight per one surface may be 10 g/m² or more.
(3) A method for manufacturing a Ni-coated steel sheet according to another aspect of the present invention is a method for manufacturing the Ni-coated steel sheet having excellent corrosion resistance after working according to (1) or (2), the method including: primary Ni coating by electric-energizing a base steel sheet with a current density of 60 to 100 A/dm²; secondary Ni coating by electric-energizing the base steel sheet with a current density of 30 A/dm² or less after the primary Ni coating; and annealing the base steel sheet after the secondary Ni coating, in which a Ni coating weight in the primary Ni coating is set to 1 to 10 g/m², and a Ni coating weight in the secondary Ni coating is set to 2 g/m² or more.

### [Effects of the Invention]

The Ni-coated steel sheet according to the present invention has excellent corrosion resistance after working. Therefore, the Ni-coated steel sheet according to the present invention can be suitably used as the material of a battery can or the like. In addition, with the method for manufacturing the Ni-coated steel sheet according to the present invention, a Ni-coated steel sheet having excellent corrosion resistance after working can be manufactured.

### [Brief Description of the Drawings]

FIG. 1 is a schematic diagram of a method for continuously performing Vickers hardness measurement from the surface layer of a Ni-coated layer to a base steel sheet using a nanoindenter, and a depth-hardness curve.
FIG. 2 is a flowchart of a method for manufacturing a Ni-coated steel sheet according to an aspect of the present invention.

### [Embodiments of the Invention]

In a normal Ni-coated steel sheet, a part of a Ni coating is alloyed by an alloying treatment such as annealing to form a diffusion alloy layer for the purpose of improving defect formation resistance. The diffusion alloy layer is slightly harder than the Ni coating and is thus regarded as contributing to the improvement of defect formation resistance. However, according to experiments by the present inventors, it was difficult to improve both corrosion resistance after sliding and corrosion resistance after bending only by controlling the diffusion alloy layer.

The present inventors considered that the problem cannot be solved only by optimizing the alloying treatment for forming the diffusion alloy layer. Therefore, the present inventors focused on the manufacturing conditions of Ni coating, which is the pre-stage of the alloying treatment, and examined various coating conditions. As a result, it was found that a diffusion alloy layer having a large hardness can be formed by alloying a Ni coating formed with an extremely large current density. When an extremely large current density is applied to a Ni coating, the working followability of a Ni layer in which Fe is not diffused is lowered due to the influence of coating burns. The present inventors also found that it is effective to combine primary Ni coating with a large current density and secondary Ni coating with a normal current density.

Furthermore, the present inventors also analyzed the structure of a Ni-coated steel sheet obtained under the above conditions. As a result, it was clarified that a hardness peak suggesting the presence of a hard region was detected in the vicinity of the interface between a Ni-coated layer and a base steel sheet of the Ni-coated steel sheet obtained under the above conditions. According to the estimation of the present inventors, this hard region suppresses the propagation of defects during working. Therefore, it is considered that the Ni-coated steel sheet obtained under the above conditions can achieve good corrosion resistance after sliding while allowing a soft Ni-coated layer to remain in order to secure corrosion resistance after bending.

A Ni-coated steel sheet 1 according to the present embodiment obtained from the above findings includes a base steel sheet 11, a diffusion alloy layer 12 disposed on the base steel sheet, and a Ni-coated layer 13 disposed on the diffusion alloy layer 12. In the Ni-coated steel sheet 1 according to the present embodiment, a depth-hardness curve obtained by continuously performing Vickers hardness measurement on a cross section perpendicular to a rolled surface of the base steel sheet 11 from a surface layer of the Ni-coated layer 13 to the base steel sheet 11 using a nanoindenter includes, in the diffusion alloy layer 12, a peak 14 (a hardness peak of 1.50 times or more) indicating a Vickers hardness of 1.50 times or more a Vickers hardness of the surface layer of the Ni-coated layer 13. It is presumed that a hard region is formed at the point corresponding to the hardness peak 14. Hereinafter, the Ni-coated steel sheet 1 according to the present embodiment will be described in detail.

### (Base Steel Sheet 11)

The base steel sheet 11 is not particularly limited. This is because in the Ni-coated steel sheet 1 according to the present embodiment, the diffusion alloy layer 12, the Ni-coated layer 13, and the hard region are used for improving the corrosion resistance after working thereof, and the base steel sheet 11 does not affect these characteristics. Therefore, the base steel sheet 11 can be appropriately selected depending on the use of the Ni-coated steel sheet 1 according to the present embodiment. For example, in a case where the Ni-coated steel sheet 1 according to the present embodiment is used as the material of a battery container, the base steel sheet 11 may be made of an original plate defined in JIS G 3303:2008 "Tinplate and blackplate", aluminum-killed steel, or interstitial free steel (IF steel). In this case, in order to decrease the size of a battery, it is preferable that the sheet thickness of the base steel sheet 11 be within a range of 0.1 to 1.0 mm.

### (Diffusion Alloy Layer 12 and Ni-coated layer 13)

The diffusion alloy layer 12 is a Ni-Fe alloy region formed by causing interdiffusion between a Ni coating and the base steel sheet 11. The Ni-coated layer 13 is a region of the Ni coating in which the above-mentioned alloying did not occur. The Ni-coated layer 13 has a small hardness and a large elongation and thus suppresses coating cracks during press working of the Ni-coated steel sheet 1. The diffusion alloy layer 12 has a higher hardness than that of the Ni-coated layer 13 and thus suppresses the generation of defects that expose the base steel sheet 11 to the outside. However, in the Ni-coated steel sheet 1 according to the present embodiment, not only the diffusion alloy layer 12 but also the hard region contributes to the suppression of the generation of defects. The diffusion alloy layer 12 and the Ni-coated layer 13 may be provided on one of the rolled surfaces or both the rolled surfaces of the base steel sheet 11.

The thickness and the like of the diffusion alloy layer 12 are not particularly limited. This is because the Ni-coated steel sheet 1 can prevent the generation of defects during sliding as long as the Ni-coated steel sheet 1 is provided with a hard region that satisfies the requirements described later. However, for example, the thickness of the diffusion alloy layer 12 may be defined as 0.3 µm or more, 0.5 µm or more, or 1.0 µm or more. When measuring the thickness of the Ni-coated layer 13, a region in which the Fe content is 5% or more and 95% or less and 90% or more of the remainder is Ni is regarded as the diffusion alloy layer 12.

The thickness and the like of the Ni-coated layer 13 are not particularly limited, and can be appropriately selected depending on the use of the Ni-coated steel sheet 1. In a case where the hardness peak 14 satisfying the requirements described later is detected in the Ni-coated steel sheet 1, the surface layer that is sufficiently softer than the hard region is provided in the Ni-coated layer 13, so that the Ni-coated layer 13 can sufficiently exhibit an effect of improving the corrosion resistance after working. However, for example, in order to further improve the corrosion resistance after working, the thickness of the Ni-coated layer 13 is preferably set to 0.1 µm or more. The thickness of the Ni-coated layer 13 may be set to 0.3 µm or more, 0.5 µm or more, or 1.0 µm or more. When measuring the thickness of the Ni-coated layer 13, a region where the Fe content is less than 5% is regarded as the Ni-coated layer 13.

### (Hard Region)

In the Ni-coated steel sheet 1 according to the present embodiment, the depth-hardness curve obtained by continuously performing Vickers hardness measurement on the cross section perpendicular to the rolled surface of the base steel sheet 11 from the surface layer of the Ni-coated layer 13 to the base steel sheet 11 using the nanoindenter includes, in the diffusion alloy layer 12, the peak 14 (hereinafter, referred to as "the hardness peak 14 of 1.50 times or more") indicating a hardness of 1.50 times or more the Vickers hardness of the surface layer of the Ni-coated layer 13. It is presumed that a region (hard region) having a hardness of 1.50 times or more that of the surface layer of the Ni-coated layer 13 is formed at the point corresponding to the hardness peak 14 of 1.50 times or more. As will be described later, the Vickers hardness of the surface layer of the Ni-coated layer 13 is a Vickers hardness obtained when indentations as close as possible to the surface of the Ni-coated layer 13 are formed by the nanoindenter in the cross section of the Ni-coated steel sheet 1 perpendicular to the rolled surface of the base steel sheet 11.

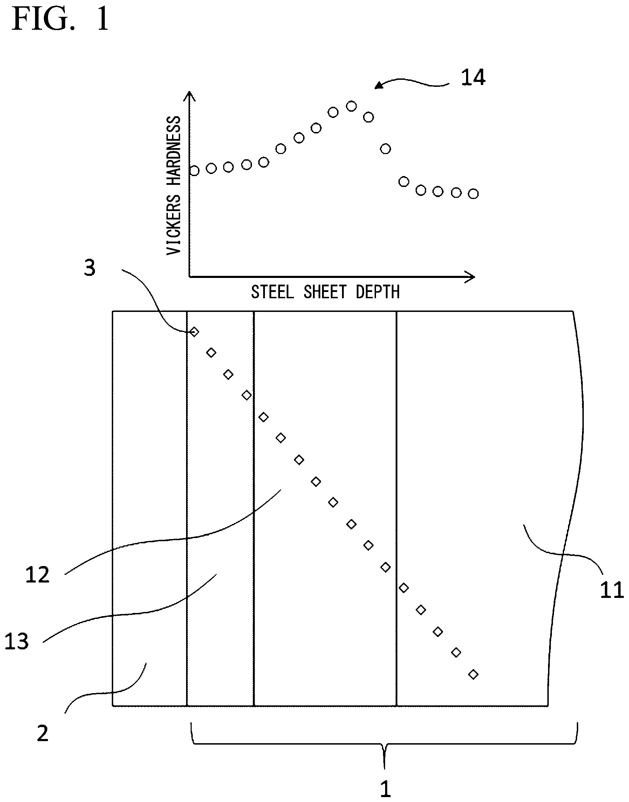

FIG. 1 shows a schematic diagram of a method for continuously performing Vickers hardness measurement from the surface layer of the Ni-coated layer 13 to the base steel sheet 11 using the nanoindenter, and the depth-hardness curve. The lower part of FIG. 1 shows a state in which indentations 3 are continuously formed on the cross section of the Ni-coated steel sheet 1 according to the present embodiment perpendicular to the rolled surface of the base steel sheet 11 by using the nanoindenter. When the depth from the surface of the Ni-coated steel sheet 1 (steel sheet depth) and the Vickers hardness of each measurement point (that is, indentation 3) are plotted, the depth-hardness curve as shown in the upper part of FIG. 1 is obtained.

The depth-hardness curve shown in the upper part of FIG. 1 has the hardness peak 14 inside the diffusion alloy layer 12. The hardness of the hardness peak 14 is 1.50 times or more the hardness on the surface of the Ni-coated steel sheet 1. In the technical field to which the Ni-coated steel sheet 1 according to the present embodiment belongs, it is known that the hardness of the diffusion alloy layer 12 is slightly larger than the hardness of the Ni-coated layer 13. However, there have been no reports of alloyed Ni-coated steel sheets containing a hard region having a hardness as high as 1.50 times or more the Vickers hardness of the surface layer of the Ni-coated layer 13.

According to the experiments by the present inventors, the Ni-coated steel sheet 1 having the hardness peak 14 of 1.50 times or more exhibits excellent defect formation resistance, thereby exhibiting excellent corrosion resistance after sliding. It is presumed that this is because the hard region indicated by the hardness peak 14 prevents defects from reaching the base steel sheet 11. By suppressing the generation of defects reaching the base steel sheet 11, it is possible to achieve the improvement of the corrosion resistance of the Ni-coated steel sheet 1. That is, the hard region also contributes to the improvement of the corrosion resistance after working of the Ni-coated steel sheet 1 by suppressing the propagation of defects due to working.

Even if the hard region is formed, the corrosion resistance after working of the Ni-coated steel sheet 1 cannot be secured unless the Ni-coated layer 13 is kept soft. Therefore, in addition to a Ni-coated steel sheet in which no hard region is formed and as a result, the hardness peak 14 of 1.50 times or more is not formed, a Ni-coated steel sheet in which the hardness of the Ni-coated layer 13 is excessive and as a result, the hardness peak 14 of 1.50 times or more is not formed is not considered to be the Ni-coated steel sheet 1 according to the present embodiment. As described above, the definition of the hardness peak 14 of the Ni-coated steel sheet 1 according to the present embodiment has the significance of securing the hardness of the hard region and the significance of keeping the hardness of the Ni-coated layer 13 low.

The absolute value of the Vickers hardness of the surface layer of the Ni-coated layer and the absolute value of the Vickers hardness at the hardness peak 14 included in the depth-hardness curve are not particularly limited. This is because good corrosion resistance after working is secured as long as these relative values are controlled. In addition, the hardness measurement value by the nanoindenter is easily affected by disturbances such as the measurement conditions (the temperature and humidity of a measurement atmosphere, the temperature of a measurement target, and the degree of wear of the indenter) and the characteristics unique to the machine body. Defining the surface layer and the hard region of the Ni-coated layer 13 by the relative values of the hardness obtained by the continuous Vickers hardness measurement has an advantage in that the influence of various disturbances in the hardness measurement by the nanoindenter can be eliminated.

The presence or absence of the hardness peak 14 of 1.50 times or more can be determined by creating the depth-hardness curve by the following procedure.

First, a Cu coating 2 having a thickness of 3 µm or more for hardness measurement is formed on the surface of the Ni-coated layer 13 of the Ni-coated steel sheet 1. This is a pretreatment for accurately measuring the hardness of the surface layer of the Ni-coated layer 13. In normal hardness measurement, the presence of a sample end surface (that is, the surface of the Ni-coated layer 13) affects the indentation size, the indenter pushing resistance, and the like, so that a point into which the indenter is driven needs to be separated from the sample end surface. However, by forming the Cu coating 2 of 3 µm or more on the surface of the sample, even if the indenter is driven into a region close to the end surface of the sample (that is, the surface layer of the Ni-coated layer 13), the hardness of the region is accurately measured.

Next, the Cu-plated Ni-coated steel sheet 1 is cut perpendicularly to the rolled surface of the base steel sheet and embedded in a resin with the cut section as the bottom. After the resin is cured, the resin is polished so that the cut section is exposed to the surface, and is further polished until the cross section becomes a mirror surface. Then, hardness measurement is continuously performed on the cross section from the surface layer of the Ni-coated layer 13 of the Ni-coated steel sheet 1 toward the base steel sheet 11 by using the nanoindenter. The hardness of the surface layer is measured with the end portion of the indentation of the nanoindenter approaching as close as possible to the interface between the Ni-coated layer 13 and the Cu coating 2. However, the indentation may not include the interface between the Ni-coated layer 13 and the Cu coating 2. In a case where the total thickness of the diffusion alloy layer 12 and the Ni-coated layer 13 is sufficiently large, continuous hardness measurement may be performed along a direction perpendicular to the rolled surface of the base steel sheet 11. However, in a case where the total thickness of the diffusion alloy layer 12 and the Ni-coated layer 13 is small, continuous hardness measurement needs to be performed in an inclined direction with respect to the rolled surface of the base steel sheet 11 (for example, a direction at an angle of 30°, or at an angle of 45° or with respect to the rolled surface of the base steel sheet 11). The measurement load of the nanoindenter is set to 10 to 200 mN, and the distance between the end portion of a measurement point and the end portion of the adjacent measurement point needs to be adjusted to be five times or more the indentation size in order to exclude the influence of adjacent measurements. This is because unless the number of measurement points (that is, indentations 3) is set to a predetermined number or more by such measurement, the hard region cannot be detected and there is a concern that the hardness peak 14 may not appear in the depth-hardness curve.

Based on the hardness measurement result obtained in this way, a depth-hardness curve as shown in the upper part of FIG. 1 can be created. In a case where the total thickness of the diffusion alloy layer 12 and the Ni-coated layer 13 is small, there are cases where the hard region cannot be detected even if the number of measurement points is set to a predetermined number or more. Therefore, it is necessary to create the depth-hardness curve at ten points. A value is calculated by dividing the hardness at the peak 14 of the depth-hardness curve at any ten points by the hardness of the surface layer of the Ni-coated layer (hereinafter abbreviated as "peak hardness / Ni-coated layer surface layer hardness"). Among the numerical values thus obtained, a Ni-coated steel sheet with the third value from the largest peak hardness / Ni-coated layer surface layer hardness being 1.50 or more is determined to be the Ni-coated steel sheet 1 according to the present embodiment. According to the confirmation by the present inventors, the improvement of the defect formation resistance was observed in such a Ni-coated steel sheet.

The measurement conditions for Vickers hardness in the above hardness measurement are as follows. A Vickers indenter with a square weight is attached to the nanoindenter, a load of 100 mN is applied for ten seconds, the load is removed for ten seconds, the size of the indentation thereafter is observed with an electron microscope, and from the measured values, the Vickers hardness can be calculated. However, the Vickers hardness measurement using a light-load nanoindenter is easily affected by wear at the tip, and there are cases where the comparison of absolute values does not have significance, so that comparison is performed with the relative values.

### (Ni Adhesion Amount)

In the Ni-coated steel sheet 1 according to the present embodiment, the Ni adhesion amount is not particularly limited and can be appropriately selected depending on the use. For example, in a case where the Ni-coated steel sheet 1 according to the present embodiment is used as the material of a battery container, the Ni coating weight per one surface is preferably set to 10 g/m² or more. Accordingly, the corrosion resistance after working required for a steel sheet for a battery can be reliably obtained. However, even if the Ni adhesion amount is less than 10 g/m², it is possible to secure the corrosion resistance after working if the Ni-coated layer 13 remains by adjusting annealing conditions. The Ni coating weight per one surface may be set to 12 g/m² or more, 15 g/m² or more, or 20 g/m² or more. In a case where the Ni adhesion amount is excessive, the effect is saturated and the manufacturing cost is increased. The Ni coating weight per one surface may be set to 50 g/m² or less, 40 g/m² or less, or 35 g/m² or less.

### (Composition of Diffusion Alloy Layer 12 and Ni-coated layer 13)

The diffusion alloy layer 12 is a layer formed by interdiffusion between the Ni coating and the base steel sheet. Therefore, in principle, the composition of the diffusion alloy layer 12 contains iron, Ni, and impurities. There is no need to specifically limit the composition, but for example, the chemical composition of the diffusion alloy layer may be defined such that the Fe content is 5% or more and 95% or less, 90% or more of the remainder is Ni, and optional impurities are further contained. The impurities are elements that are incorporated due to various factors such as the material and the manufacturing process, and are allowed within a range in which the Ni-coated steel sheet 1 according to the present embodiment is not adversely affected. Furthermore, in order to improve the mechanical properties and corrosion resistance of the coating, a trace amount of alloying elements may be further contained in the diffusion alloy layer 12. Examples of the alloying elements that can be contained in the diffusion alloy layer 12 include Co and the like.

The Ni-coated layer 13 is a layer of the Ni coating in which interdiffusion with the base steel sheet did not occur. Therefore, in principle, most of the composition of the Ni-coated layer 13 is Ni, and iron and impurities are optionally contained. There is no need to specifically limit the composition, but for example, the chemical composition of the Ni-coated layer 13 may be defined such that the Fe content is less than 5%, 90% or more of the remainder is Ni, and optional impurities are further contained. The impurities are elements that are incorporated due to various factors such as the material and the manufacturing process, and are allowed within a range in which the Ni-coated steel sheet 1 according to the present embodiment is not adversely affected. Furthermore, in order to improve the mechanical properties and corrosion resistance of the coating, a trace amount of alloying elements may be further contained in the Ni-coated layer 13. Examples of the alloying element that can be contained in the Ni-coated layer 13 include Co and the like.

The procedure for measuring the thickness and composition of the diffusion alloy layer 12 and the Ni-coated layer 13 and the Ni adhesion amount is as follows.

The thicknesses of the diffusion alloy layer 12 and the Ni-coated layer 13 can be measured by analyzing element concentrations in a depth direction using EDS of TEM or the like. By polishing the cut section of the Ni-coated steel sheet 1 perpendicular to the rolled surface of the base steel sheet 11 and continuously analyzing the composition from the surface of the Ni-coated steel sheet 1 toward the base steel sheet 11, a region in which the Fe content is 5% or more and 95% or less and 90% or more of the remainder is Ni (that is, the diffusion alloy layer 12), a region in which the Fe content is less than 5% and 90% or more of the remainder is Ni (that is, the Ni-coated layer 13), and the other region (that is, the base steel sheet 11) can be identified. Based on the identification result, the interface of each of the base steel sheet 11, the diffusion alloy layer 12, and the Ni-coated layer 13 can be specified. By measuring the distance between the interfaces, the thicknesses of the diffusion alloy layer 12 and the Ni-coated layer 13 can be measured. In consideration of variation, it is desirable to perform the above measurement at five points and regard the average value of the measured values at each point as the thickness of the diffusion alloy layer 12 and the Ni-coated layer 13. The compositions of the diffusion alloy layer 12 and the Ni-coated layer 13 can also be determined by analysis using EDS of TEM or the like.

The procedure for measuring the Ni coating weight per one surface of the Ni-coated steel sheet 1 is as follows. First, the diffusion alloy layer 12 and the Ni-coated layer 13 having a predetermined area are dissolved with an acid. Next, the total amount of Ni contained in the solution is quantitatively analyzed by ICP. By dividing the total amount of Ni quantified by ICP by the above-mentioned predetermined area, the Ni adhesion amount per unit area can be obtained.

Next, a method for manufacturing the Ni-coated steel sheet according to the present embodiment will be described. According to this manufacturing method, the Ni-coated steel sheet 1 according to the present embodiment can be suitably produced. However, it should be noted that the method for manufacturing the Ni-coated steel sheet 1 according to the present embodiment is not particularly limited. A Ni-coated steel sheet obtained by a manufacturing method different from the method for manufacturing the Ni-coated steel sheet described below is regarded as the Ni-coated steel sheet 1 according to the present embodiment as long as the above-mentioned requirements are satisfied.

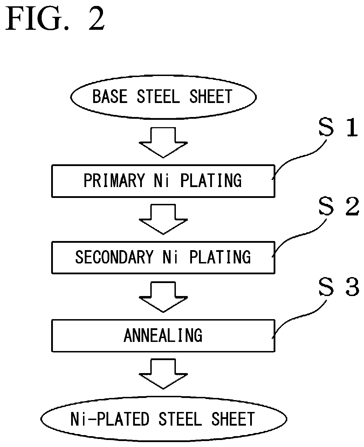

As shown in FIG. 2, the method for manufacturing the Ni-coated steel sheet according to the present embodiment includes primary Ni coating (S1) by electric-energizing the base steel sheet with a current density of 60 to 100 A/dm², secondary Ni coating (S2) by electric-energizing the base steel sheet with a current density of 30 A/dm² or less after the primary Ni coating, and annealing (S3) the base steel sheet after the secondary Ni coating. The method for manufacturing the base steel sheet is not particularly limited. For example, the base steel sheet may or may not be annealed before being subjected to Ni coating.

### (Primary Ni coating S1)

In the primary Ni coating S1, a Ni coating is formed by electric-energizing the base steel sheet with a current density of 60 to 100 A/dm². This range of current density is very large as an electrolytic Ni coating condition, and is usually a level that is avoided in consideration of adverse effects such as seizure of the coating surface. However, according to the findings of the present inventors, it is considered that by applying such an extremely large current density to the primary Ni coating S1, it is possible to apply a driving force for forming a hard region to the Ni coating before annealing. In a case where the current density in the primary Ni coating S1 is less than 60 A/dm², a hard region cannot be formed. On the other hand, in a case where the current density in the primary Ni coating S1 is more than 100 A/dm², a normal Ni coating cannot be formed. The adverse effect of the large current density in the primary Ni coating S1 is alleviated by the subsequent secondary Ni coating S2.

In the primary Ni coating S1, the Ni coating weight is preferably set to 10 g/m² or less. In a case where the Ni coating weight in the primary Ni coating S1 exceeds 10 g/m², there is a concern that a normal Ni coating cannot be formed due to the increase in the electric-energization time at a large current density. In a case where the Ni coating weight is to be increased, it is desirable to increase the electric-energization time in the secondary Ni coating S2 described later. On the other hand, in order to reliably obtain the effect of electric-energization at the above-mentioned large current density, it is preferable that the Ni coating weight in the primary Ni coating S1 be set to 1 g/m² or more.

### (Secondary Ni coating S2)

In the secondary Ni coating S2, Ni coating is further performed on the base steel sheet 11 on which the Ni coating is formed by the primary Ni coating S1. Here, by electric-energizing the base steel sheet with a relatively low current density of 30 A/dm² or less, adverse effects such as seizure in the primary Ni coating S1 are alleviated. In a case where the secondary Ni coating S2 is omitted, the hardness of the Ni-coated layer 13 after annealing becomes excessive, and the hardness of the hard region cannot be 1.50 times or more the hardness of the Ni-coated layer 13. In this case, the effect of improving the corrosion resistance after working by the Ni-coated layer 13 cannot be obtained.

In the secondary Ni coating S2, the Ni coating weight is preferably set to 2 g/m² or more. In a case where the Ni coating weight in the secondary Ni coating S2 is set to less than 2 g/m², there is a concern that the influence of the primary Ni coating S1 may not be sufficiently alleviated.

### (Annealing S3)

In the annealing S3, the base steel sheet 11 on which the Ni coating is formed by the primary Ni coating S1 and the secondary Ni coating S2 is annealed. By this annealing, a part of the Ni coating becomes the diffusion alloy layer 12, and a hard region is further formed. The annealing conditions are not particularly limited, and alloying annealing conditions for normal Ni coating can be appropriately selected. According to the findings of the present inventors, the current density in the primary Ni coating S1 has the greatest effect on the presence or absence of the hardness peak 14 of 1.50 times or more in the depth-hardness curve of the Ni-coated steel sheet 1, and the effect of annealing conditions is hardly seen. However, annealing conditions under which the Ni-coated layer 13 disappears when all of the Ni coating is alloyed are not preferable. In order to manufacture a Ni-coated steel sheet including the Ni-coated layer 13, it is necessary to select annealing conditions according to the total coating adhesion amount so that the Ni-coated layer 13 remains.

In the method for manufacturing the Ni-coated steel sheet according to the present embodiment, other conditions are not particularly limited, and can be appropriately determined depending on the use and the like of the Ni-coated steel sheet 1. Examples of a coating bath composition include nickel sulfate hexahydrate: 300 to 400 g/L, nickel chloride hexahydrate: 30 to 100 g/L, and boric acid: 20 to 50 g/L.

### [Examples]

The effects of one aspect of the present invention will be described more specifically by way of examples. However, the conditions in the examples are one example of conditions adopted to confirm the feasibility and effects of the present invention. The present invention is not limited to this one example of conditions. The present invention can adopt various conditions as long as the object of the present invention is achieved without departing from the gist of the present invention.

Experimental Examples 1 to 19 of the Ni-coated steel sheet were produced by a manufacturing method including primary Ni coating by electric-energizing an unannealed base steel sheet including, as a chemical composition, by unit mass%, C: 0.004%, Si: 0.01%, Mn: 0.17%, P: 0.013%, S: 0.004%, S-Al: 0.035%, N: 0.001%, Nb: 0.025%, and a remainder being Fe and impurities and having a sheet thickness of 0.3 mm with the current density shown in Table 1, secondary Ni coating by electric-energizing this base steel sheet with the current density shown in Table 1 after the primary Ni coating, and annealing the base steel sheet under the annealing conditions shown in Table 1 after the secondary Ni coating.

**[Table 1]**

| No. | Primary Ni coating S1 | | Secondary Ni coating S2 | | Adhesion amount (Total) | Annealing condition |
|---|---|---|---|---|---|---|
| | Current density | Coating adhesion amount | Current density | Coating adhesion amount | | |
| 1 | 60A/dm² | 5g/m² | 30A/dm² | 5g/m² | 10g/m² | 800°C×20sec |
| 2 | 60A/dm² | 5g/m² | 30A/dm² | 10g/m² | 15g/m² | 800°C×20sec |
| 3 | 60A/dm² | 5g/m² | 30A/dm² | 20g/m² | 25g/m² | 800°C×20sec |
| 4 | 60A/dm² | 5g/m² | 30A/dm² | 30g/m² | 35g/m² | 800°C×20sec |
| 5 | 60A/dm² | 1g/m² | 30A/dm² | 14g/m² | 15g/m² | 800°C×20sec |
| 6 | 60A/dm² | 3g/m² | 30A/dm² | 12g/m² | 15g/m² | 800°C×20sec |
| 7 | 60A/dm² | 10g/m² | 30A/dm² | 5g/m² | 15g/m² | 800°C×20sec |
| 8 | 60A/dm² | 10g/m² | 30A/dm² | 2g/m² | 12g/m² | 800°C×20sec |
| 9 | 100A/dm² | 10g/m² | 30A/dm² | 5g/m² | 15g/m² | 800°C×20sec |
| 10 | 60A/dm² | 5g/m² | 30A/dm² | 3g/m² | 8g/m² | 700°C×20sec |
| 11 | 60A/dm² | 9g/m² | 30A/dm² | 1g/m² | 10g/m² | 800°C×20sec |
| 12 | 120A/dm² | 10g/m² | 30A/dm² | 5g/m² | 15g/m² | 800°C×20sec |
| 13 | 60A/dm² | 10g/m² | -- | -- | 10g/m² | 800°C×20sec |
| 14 | 30A/dm² | 5g/m² | 30A/dm² | 5g/m² | 10g/m² | 800°C×20sec |
| 15 | 30A/dm² | 10g/m² | -- | -- | 10g/m² | 800°C×20sec |
| 16 | 30A/dm² | 35g/m² | -- | -- | 35g/m² | 800°C×20sec |
| 17 | 60A/dm² | 5g/m² | 30A/dm² | 3g/m² | 5g/m² | 800°C×20sec |
| 18 | 60A/dm² | 5g/m² | 30A/dm² | 26g/m² | 31g/m² | 650°C×60min |
| 19 | 30A/dm² | 31g/m² | - | - | 31 g/m² | 650°C×60min |

Other conditions not shown in Table 1 are as follows.
Bath composition: Nickel sulfate hexahydrate 350 g/L, nickel chloride hexahydrate 60 g/L, and boric acid 40 g/L
Bath temperature: 55°C
pH: Adjusted to 3 with sulfuric acid or basic nickel carbonate
Annealing Atmosphere: 4%H₂-N₂

The presence or absence of a hard region, the corrosion resistance after bending, and the corrosion resistance after sliding in the Ni-coated steel sheet obtained by the above method were determined by the following methods.

The presence or absence of a hard region was evaluated by the following procedure. First, a Cu coating having a thickness of 3 µm or more was formed on the surface of the Ni-coated layer 13 of the Ni-coated steel sheet 1. The Cu-plated Ni-coated steel sheet 1 was cut perpendicularly to the rolled surface of the base steel sheet and embedded in a resin with the cut section as the bottom. After the resin was cured, the resin was polished so that the cut section was exposed to the surface, and was further polished until the cross section became a mirror surface. Then, hardness measurement was continuously performed on the cross section from the surface layer of the Ni-coated layer 13 of the Ni-coated steel sheet 1 toward the base steel sheet 11 by using a nanoindenter. The nanoindenter used was a nanoindenter HM2000XYp manufactured by Fischer. When forming the indentation 3, a Vickers indenter with a regular square weight was attached to the nanoindenter, the load was set to 100 mN, the test load arrival time was set to ten seconds, the test load retention time was set to ten seconds, and the test load removal time was set to ten seconds. The size of the indentation 3 was measured based on an electron micrograph. The electron micrograph was a secondary electron image taken using an electron microscope JSM-IT300LA manufactured by JEOL Ltd. Observation was performed with an accelerating voltage of 15 kV, the indentation size was measured, and the Vickers hardness was calculated according to JIS Z 2244. The hardness of the surface layer was measured with the end portion of the indentation 3 by the nanoindenter approaching as close as possible to the interface between the Ni-coated layer 13 and the Cu coating 2. However, the indentation did not include the interface between the Ni-coated layer 13 and the Cu coating 2. In a case where the total thickness of the diffusion alloy layer 12 and the Ni-coated layer 13 was small, continuous hardness measurement was performed in an inclined direction with respect to the rolled surface of the base steel sheet 11. The above measurement was performed at ten points. Of the values obtained by dividing the obtained hardness at the peak 14 of the depth-hardness curve at ten points by the obtained hardness of the surface layer of the Ni-coated layer, the third value from the largest was described as "Hardness ratio Peak / surface layer of Ni-coated layer" in Table 2. In a case where the peak / surface layer of Ni-coated layer was 1.50 or more, the Ni-coated steel sheet was regarded as the Ni-coated steel sheet 1 having the hardness peak 14 of the present invention. For reference, values were obtained by dividing the hardness at the peak of the depth-hardness curve by the hardness of the base steel sheet 11, three values were selected in order from the largest, and the average value thereof was described as "Hardness ratio Peak / base steel sheet" in Table 2. In any of the examples, the position of the peak 14 was inside the diffusion alloy layer.

Corrosion resistance after bending was evaluated by the following procedure. Two steel sheets of the same thickness as a test piece were stacked on one side of the test piece, these stacked sheets were then bent 180° (2T bending) so that the test piece was on the outside, and then the test piece was bent back. Then, 1 %-NaCl aqueous solution was sprayed on the bent back test piece, and the test piece was held in an atmosphere of 60°C and 95% humidity for two hours. After the procedures, the presence or absence of red rust on the surface of the test piece was evaluated. A sample with red rust that could be confirmed with the naked eye was determined to have inferior corrosion resistance after bending and was described as "BAD" in the "Corrosion resistance after bending" column of the table.

Corrosion resistance after sliding was evaluated by the following procedure. A load of 10 times the Ni adhesion amount per 1 m² (for example, if the Ni adhesion amount is 10 g/m², the load is 100 g) was applied to a tungsten needle projected perpendicularly to the coating surface of each sample, and 50 mm was scanned with the needle at a speed of 10 mm/sec. The tungsten needle had a diameter of 1 mm, a tip angle of 45° and a tip R of 0.05 mm. 1%-NaCl aqueous solution was sprayed on the scratches caused by this, the test piece was held in an atmosphere of 60°C and 95% humidity for two hours, and then the presence or absence of red rust on the surface of the test piece was evaluated. A sample with red rust that could be confirmed with the naked eye was determined to have inferior corrosion resistance after sliding and was described as "BAD" in the "Scratch" column of the table.

**[Table 2]**

| No. | Hardness ratio | | Results of evaluation test | | Remarks |
|---|---|---|---|---|---|
| | Peak / Surface layer of Ni coating layer | Peak / Base steel sheet | Corrosion resistance after bending (crack) | Corrosion resistance after sliding | |
| 1 | 1.54 | 1.72 | GOOD | GOOD | Examples |
| 2 | 1.82 | 1.79 | GOOD | GOOD | |
| 3 | 1.97 | 1.77 | GOOD | GOOD | |
| 4 | 2.00 | 1.72 | GOOD | GOOD | |
| 5 | 1.61 | 1.45 | GOOD | GOOD | |
| 6 | 1.79 | 1.61 | GOOD | GOOD | |
| 7 | 1.79 | 1.75 | GOOD | GOOD | |
| 8 | 1.56 | 1.72 | GOOD | GOOD | |
| 9 | 1.75 | 1.75 | GOOD | GOOD | |
| 10 | 1.55 | 1.71 | GOOD | GOOD | |
| 11 | 1.39 | 1.79 | BAD | GOOD | Comparative Examples |
| 12 | NOT MEASURABLE | NOT MEASURABLE | NOT EVALUATABLE | NOT EVALUATABLE | |
| 13 | 1.43 | 1.79 | BAD | GOOD | |
| 14 | 1.37 | 1.22 | GOOD | BAD | |
| 15 | 1.23 | 1.19 | GOOD | BAD | |
| 16 | 1.39 | 1.20 | GOOD | BAD | |
| 17 | NO Ni LAYER | 1.79 | BAD | GOOD | |
| 18 | 1.62 | 1.58 | GOOD | GOOD | Example |
| 19 | 1.25 | 1.10 | GOOD | BAD | Comparative Example |

Examples 1 to 10 and 18 included the base steel sheet, the diffusion alloy layer disposed on the base steel sheet, and the Ni-coated layer disposed on the diffusion alloy layer, and the depth-hardness curve obtained by continuously performing Vickers hardness measurement on the cross section perpendicular to the rolled surface of the base steel sheet from the surface layer of the Ni-coated layer to the base steel sheet using the nanoindenter included, in the diffusion alloy layer, the peak 14 (the hardness peak 14 of 1.50 times or more) indicating a hardness of 1.50 times or more the Vickers hardness of the surface layer of the Ni-coated layer. These examples were excellent in corrosion resistance after bending and corrosion resistance after sliding (that is, corrosion resistance after working).

On the other hand, Comparative Examples 11 to 17 and 19 did not satisfy the requirements of the present invention and were determined to be unacceptable in the evaluation test.

Comparative Example 11 did not include the hardness peak 14 of 1.50 times or more. It is considered that this is because the coating adhesion amount in the secondary Ni coating was too small, so that the adverse effect of the large current density in the primary Ni coating could not be alleviated, and the hardness of the surface layer of the Ni-coated layer of Comparative Example 11 became excessive. Therefore, Comparative Example 11 was inferior in corrosion resistance after bending.

In Comparative Example 12, the adhesion of the Ni coating was very low, and Ni coating peels had occurred at many points. Therefore, Comparative Example 12 could not be subjected to the hardness measurement and characteristic evaluation test. It is considered that this is because the current density in the primary Ni coating was excessive and the adverse effect could not be alleviated by the secondary Ni coating.

Comparative Example 13 did not include the hardness peak 14 of 1.50 times or more. It is considered that this is because the secondary Ni coating was not performed, so that the hardness of the surface layer of the Ni-coated layer of Comparative Example 13 became excessive as in Comparative Example 11. Therefore, Comparative Example 13 was inferior in corrosion resistance after bending.

Comparative Examples 14 to 16 did not include the hardness peak 14 of 1.50 times or more. It is considered that this is because the current density in the primary Ni coating was insufficient, so that the hard region having sufficient hardness was not formed after annealing in Comparative Examples 14 to 16. Therefore, Comparative Examples 14 to 16 were inferior in corrosion resistance after sliding.

Comparative Example 17 did not include the Ni-coated layer. It is considered that this is because the annealing temperature and annealing time were too long for the total coating adhesion amount in the primary Ni coating and the secondary Ni coating, and all of the Ni coating of Comparative Example 17 was alloyed. Therefore, Comparative Example 17 was inferior in corrosion resistance after bending.

Comparative Example 19 had the same coating adhesion amount and annealing conditions as in Example 18, but did not include the hardness peak 14 of 1.50 times or more. It is considered that this is because the current density in the primary Ni coating was insufficient, so that the hard region having sufficient hardness was not formed after annealing in Comparative Example 19. Therefore, Comparative Example 19 was inferior in corrosion resistance after sliding.

### [Industrial Applicability]

The Ni-coated steel sheet according to the present invention has excellent corrosion resistance after working. In a case where the present invention is used, for example, as the material of a battery can, the present invention contributes to a decrease in size and an increase in capacity of the battery. With the method for manufacturing the Ni-coated steel sheet according to the present invention, a Ni-coated steel sheet having high corrosion resistance after working can be manufactured. Therefore, the industrial applicability of the present invention is very high.

### [Brief Description of the Reference Symbols]

- 1: Ni-coated steel sheet
- 11: Base steel sheet
- 12: Diffusion alloy layer
- 13: Ni-coated layer
- 14: Hardness peak
- 2: Cu coating for hardness measurement
- 3: Indentation
- S1: Primary Ni coating
- S2: Secondary Ni coating
- S3: Annealing

## Claims

1. A Ni-coated steel sheet having excellent corrosion resistance after working, comprising:
a base steel sheet;
a diffusion alloy layer disposed on the base steel sheet; and
a Ni-coated layer disposed on the diffusion alloy layer,
wherein a depth-hardness curve obtained by continuously performing Vickers hardness measurement on a cross section perpendicular to a rolled surface of the base steel sheet from a surface layer of the Ni-coated layer to the base steel sheet using a nanoindenter includes, in the diffusion alloy layer, a peak indicating a Vickers hardness of 1.50 times or more a Vickers hardness of the surface layer of the Ni-coated layer.

2. The Ni-coated steel sheet having excellent corrosion resistance after working according to Claim 1,
wherein a Ni coating weight per one surface is 10 g/m² or more.

3. A method for manufacturing the Ni-coated steel sheet having excellent corrosion resistance after working according to Claim 1 or 2, the method comprising:
primary Ni coating by electric-energizing a base steel sheet with a current density of 60 to 100 A/dm²;
secondary Ni coating by electric-energizing the base steel sheet with a current density of 30 A/dm² or less after the primary Ni coating; and
annealing the base steel sheet after the secondary Ni coating,
wherein a Ni coating weight in the primary Ni coating is set to 1 to 10 g/m², and a Ni coating weight in the secondary Ni coating is set to 2 g/m² or more.
